# EUROPEAN PATENT APPLICATION

(11) **EP 2 911 329 A1**
(43) Date of publication of application: **26.08.2015**
(21) Application number: 12888393.1
(22) Date of filing: 15.11.2012
(51) Int. Cl.: H04L 1/00

(54) **CHANNEL TRANSMISSION METHOD, DEVICE, BASE STATION AND TERMINAL**

(71) Applicant: Huawei Technologies Co., Ltd., Longgang District Shenzhen, Guangdong 518129 (CN)
(72) Inventor: LIU, Deping, Shenzhen Guangdong 518129 (CN); WU, Yuchun, Shenzhen Guangdong 518129 (CN)
(74) Representative: Epping - Hermann - Fischer
(86) International application number: PCT/CN2012/084682
(87) International publication number: WO 2014/075272

(57) **Abstract**

The present invention discloses a channel transmission method and apparatus, a base station and a terminal. The method includes: a base station transmits a downlink channel to a terminal according to transmission information of the downlink channel; the base station receives a feedback channel transmitted by the terminal according to transmission information of the feedback channel, and combines and decodes the feedback channel, wherein the feedback channel is used by the terminal to feed back ACK to the base station after correctly receiving the downlink channel. The embodiments of the present invention are applied in a network combining M2M with an LTE communication system. By means of the feature of small transmission data or signaling of the terminals in the M2M, when scheduling the terminal, the base station directly transmits one kind of downlink channel, thus the system overhead is reduced; correspondingly, for terminals in the M2M, since these terminals do not need to detect a large amount of control channels to obtain the data channel, but only need to detect the one kind of downlink channel to obtain corresponding data or signaling, electric energy of the terminals is saved.

## Description

### FIELD OF THE INVENTION

The present invention relates to the technical field of communications, and particularly, to a channel transmission method and apparatus, a base station and a terminal.

### BACKGROUND OF THE INVENTION

In a 3rd generation partnership project (The 3rd Generation Partnership Project, 3GPP) long term evolution (Long Term Evolution, LTE) communication system, when a terminal is scheduled, a base station sends a control channel to the terminal, wherein the control channel indicates a frequency domain position of a data channel, the number of the occupied resource blocks (Resource Block, RB) by the frequency domain position, positions where these RBs are located on a system bandwidth, size information of a data packet transmitted by the data channel and information necessary for demodulation and decoding, and the like. The control channel may be sent on a preset time-frequency resource of each subframe. Since multiple possible positions of the control channel exist on the preset time-frequency resource, each terminal needs to detect possible control channels one by one by blind detection to obtain information of the control channel, so as to obtain the information of the data channel indicated by the control channel.

Machine to machine (Machine to Machine, M2M) technology is used for connecting articles with the internet through an information sensing device, in order to achieve an intelligent identification and management network. M2M is much larger than the existing internet, and may be widely used in various fields of intelligent power grid, intelligent transportation, environmental protection, intelligent home, etc. After the machine to machine network is combined with the wireless communication technology, a terminal in the M2M may communicate according to a communication manner defined in the LTE system, and the terminal in the M2M network is called a machine type communication (Machine Type Communication, MTC) terminal. The MTC terminal is generally arranged in a building or is enclosed by a metal shell. Based on the above-mentioned properties of the MTC terminal, transmission loss on the a transmission path between base station and the MTC terminal is large, thus the coverage of the MTC terminal needs to be improved.

If being still in accordance with the scheduling manner of the terminal in the LTE system, the base station repeatedly transmits the control channel at multiple subframes for multiple times, and the terminal massively receive, combine and detect the control channel to obtain the information of the control channel, so as to obtain information of a data channel, which results in overlarge system overhead and wastes electric energy of the MTC terminal.

### SUMMARY OF THE INVENTION

Embodiments of the present invention provide a channel transmission method, apparatus, base station and terminal, in order to solve the problem that an MTC terminal in M2M obtains a data channel by blindly detecting and combining control channels for multiple times, which results in over large system overhead and wastes the electric energy of the terminal.

To solve the above-mentioned technical problems, the embodiments of the present invention disclose the following technical solutions:
in a first aspect, a channel transmission method is provided, including:
   transmitting, by a base station, a downlink channel to a terminal according to transmission information of the downlink channel; and
   receiving, by the base station, a feedback channel transmitted by the terminal according to transmission information of the feedback channel, and combining and decoding the feedback channel, wherein the feedback channel is used by the terminal to feed back a receiving acknowledgement ACK to the base station after the terminal correctly receives the downlink channel.

In combination with the first aspect, in a first possible implementation manner of the first aspect,
the transmission information of the downlink channel at least includes number of transmissions of the downlink channel; and
the transmission information of the feedback channel at least includes number of transmissions of the feedback channel.

In combination with the first possible implementation manner of the first aspect, in a second possible implementation manner of the first aspect, the transmission information of the downlink channel further includes at least one piece of the following information: a time domain resource, or a frequency domain resource, or a time domain and frequency domain resource capable being selected to be occupied by the downlink channel; a modulation format adopted by the downlink channel; and an encoding format adopted by the downlink channel;
the transmission information of the feedback channel further includes at least one piece of the following information: a time domain resource, or a frequency domain resource, or a time domain and frequency domain resource occupied by the feedback channel; a modulation format adopted by the feedback channel; and an encoding format adopted by the feedback channel.

In combination with the first aspect, or the first possible implementation manner of the first aspect, or the second possible implementation manner of the first aspect, in a third possible implementation manner of the first aspect, a preset relationship exists between the feedback channel transmitted by the terminal and the downlink channel;
wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

In combination with the first aspect, or the first possible implementation manner of the first aspect, or the second possible implementation manner of the first aspect, in a fourth possible implementation manner of the first aspect, a time domain resource, or a frequency domain resource, or a time domain and frequency domain resource of the feedback channel transmitted by the terminal is a time domain resource, or a frequency domain resource, or a time domain and frequency domain resource notified by the base station.

In combination with the fourth possible implementation manner of the first aspect, in a fifth possible implementation manner of the first aspect, the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

In combination with the first possible implementation manner of the first aspect, or the second possible implementation manner of the first aspect, or the third possible implementation manner of the first aspect, or the fourth possible implementation manner of the first aspect, or the fifth possible implementation manner of the first aspect, in a sixth possible implementation manner of the first aspect, the receiving a feedback channel transmitted by the terminal, includes:
receiving the feedback channel repeatedly transmitted by the terminal after all downlink channels are repeatedly transmitted, or receiving the feedback channel repeatedly transmitted by the terminal after a part of the downlink channels are repeatedly transmitted; wherein,
the receiving the feedback channel repeatedly transmitted by the terminal after a part of the downlink channels are repeatedly transmitted, is specifically as follows: dividing all downlink channels to be repeatedly transmitted into multiple groups, receiving the feedback channel repeatedly transmitted by the terminal after each group of downlink channels is repeatedly transmitted, until the ACK is received or the multiple groups of downlink channels are transmitted.

In combination with the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, in a seventh possible implementation manner of the first aspect, the downlink channel is a downlink data channel used for transmitting data, or a downlink control channel used for transmitting signaling;
wherein, the signaling includes control signaling for scheduling uplink transmission, or MAC signaling.

In combination with the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, or the seventh possible implementation manner of the first aspect, in an eighth possible implementation manner of the first aspect, before the transmitting, by a base station, a downlink channel to a terminal according to transmission information of the downlink channel, the method further includes:
padding, by the base station, an original information bit of data or signaling whose length is smaller than a datum length and which is transmitted by the downlink channel, for enabling the length of the padded data or signaling to reach the datum length.

In combination with the first possible implementation manner of the first aspect, or the second possible implementation manner of the first aspect, or the third possible implementation manner of the first aspect, or the fourth possible implementation manner of the first aspect, or the fifth possible implementation manner of the first aspect, or the sixth possible implementation manner of the first aspect, or the seventh possible implementation manner of the first aspect, or the eighth possible implementation manner of the first aspect, in a ninth possible implementation manner of the first aspect, data or signaling transmitted by the downlink channel includes packet header information, wherein the packet header information includes at least one piece of the following information: an original length of the data or signaling, and a type of the data or signaling.

In a second aspect, another channel transmission method is provided, including:
receiving, by a terminal, a downlink channel transmitted by a base station according to transmission information of the downlink channel;
combining and decoding or blindly decoding, by the terminal, the received downlink channel;
transmitting, by the terminal, a feedback channel to the base station according to transmission information of the feedback channel, wherein the feedback channel is used by the terminal to feed back ACK to the base station after the terminal determines, according to a blind decoding result that, the downlink channel is received correctly.

In combination with the second aspect, in a first possible implementation manner of the second aspect,
the transmission information of the downlink channel at least includes number of transmissions of the downlink channel; and
the transmission information of the feedback channel at least includes number of transmissions of the feedback channel.

In combination with the first possible implementation manner of the second aspect, in a second possible implementation manner of the second aspect,
the transmission information of the downlink channel further includes at least one piece of the following information: a time domain resource or a time domain and frequency domain resource capable being selected to be occupied by the downlink channel; a time domain resource or a time domain and frequency domain resource used by the terminal for transmitting the feedback channel; a modulation format adopted by the downlink channel; and an encoding format adopted by the downlink channel; and
the transmission information of the feedback channel further includes at least one piece of the following information: a time domain resource or a time domain and frequency domain resource occupied by the feedback channel; a modulation format adopted by the feedback channel; an encoding format adopted by the feedback channel.

In combination with the second aspect, or the first possible implementation manner of the second aspect, or the second possible implementation manner of the second aspect, in a third possible implementation manner of the second aspect, a preset relationship exists between the feedback channel transmitted by the terminal and the downlink channel;
wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

In combination with the second aspect, or the first possible implementation manner of the second aspect, or the second possible implementation manner of the second aspect, in a fourth possible implementation manner of the second aspect, a time domain resource, or a frequency domain resource, or a time domain and frequency domain resource of the feedback channel transmitted by the terminal is a time domain resource, or a frequency domain resource, or a time domain and frequency domain resource notified by the base station.

In combination with the fourth possible implementation manner of the second aspect, in a fifth possible implementation manner of the second aspect, the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

In combination with the first possible implementation manner of the second aspect, or the second possible implementation manner of the second aspect, or the third possible implementation manner of the second aspect, or the fourth possible implementation manner of the second aspect, or the fifth possible implementation manner of the second aspect, in a sixth possible implementation manner of the second aspect, the transmitting a feedback channel to the base station, includes:
repeatedly transmitting the feedback channel to the base station after the base station repeatedly transmits all downlink channels, or repeatedly transmitting the feedback channel to the base station after the base station repeatedly transmits a part of the downlink channels; wherein,
the repeatedly transmitting the feedback channel to the base station after the base station repeatedly transmits a part of the downlink channels, is specifically as follows: repeatedly transmitting the feedback channel to the base station, after the base station divides all downlink channels to be repeatedly transmitted into multiple groups and each group of downlink channels is repeatedly transmitted.

In combination with the second aspect, or first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, in a seventh possible implementation manner of the second aspect, the downlink channel is a downlink data channel used for transmitting data, or a downlink control channel used for transmitting signaling;
wherein, the signaling includes control signaling for scheduling uplink transmission, or MAC signaling.

In combination with the second aspect, or the first possible implementation manner of the second aspect, or the second possible implementation manner of the second aspect, or the third possible implementation manner of the second aspect, or the fourth possible implementation manner of the second aspect, or the fifth possible implementation manner of the second aspect, or the sixth possible implementation manner of the second aspect, or the seventh possible implementation manner of the second aspect, in an eighth possible implementation manner of the second aspect, the method further includes: when data or signaling transmitted by the downlink channel is the data or signaling obtained by the base station by padding an original information bit of the data or signaling whose length is smaller than a datum length and which is transmitted by the downlink channel to enable the length to reach the datum length, packet header information of the padded data or signaling includes at least one piece of the following information: an original length of the data or signaling, and a type of the data or signaling;
the combining and blindly decoding the received downlink channel, specifically includes: decoding the combined downlink channel according to the datum length of the data or signaling; and
the method further includes: when the blind decoding is correct, reading the packet header information of the data or signaling to obtain original information of the data or signaling.

In a third aspect, a channel transmission apparatus is provided, including:
a first transmitting unit, configured to transmit a downlink channel to a terminal according to transmission information of the downlink channel;
a first receiving unit, configured to receive a feedback channel transmitted by the terminal according to transmission information of the feedback channel, wherein the feedback channel is used by the terminal to feed back ACK to the base station after correctly receiving the downlink channel transmitted by the first transmitting unit; and
a first combining and decoding unit, configured to combine and decode the feedback channel received by the first receiving unit.

In combination with the third aspect, in a first possible implementation manner of the third aspect, the first transmitting unit is specifically configured to, when the transmission information of the downlink channel includes number of transmissions of the downlink channel, transmit the downlink channel to the terminal according to the number of transmissions of the downlink channel; and
the first receiving unit is specifically configured to, when the transmission information of the feedback channel includes number of transmissions of the feedback channel, receive the feedback channel transmitted by the terminal according to the number of transmissions of the feedback channel.

In combination with the third aspect, or the first possible implementation manner of the third aspect, in a second possible implementation manner of the third aspect, a preset relationship exists between the feedback channel received by the first receiving unit and the downlink channel transmitted by the first transmitting unit; wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

In combination with the third aspect, or the first possible implementation manner of the third aspect, in a third possible implementation manner of the third aspect, a time domain resource, or a frequency domain resource, or a time domain and frequency domain resource of the feedback channel received by the first receiving unit is a time domain resource, or a frequency domain resource, or a time domain and frequency domain resource notified by the first transmitting unit through the downlink channel.

In combination with the first possible implementation manner of the third aspect, or the second possible implementation manner of the third aspect, or the third possible implementation manner of the third aspect, in a fourth possible implementation manner of the third aspect, the first receiving unit is specifically configured to receive the feedback channel repeatedly transmitted by the terminal after the first transmitting unit repeatedly transmits all downlink channels, or receive the feedback channel repeatedly transmitted by the terminal after the first transmitting unit transmits a part of the downlink channels;
wherein, the receiving the feedback channel repeatedly transmitted by the terminal after a part of the downlink channels are repeatedly transmitted, is specifically as follows: dividing all downlink channels to be repeatedly transmitted into multiple groups, and receiving the feedback channel repeatedly transmitted by the terminal after each group of downlink channels is repeatedly transmitted, until the ACK is received or the multiple groups of downlink channels are transmitted.

In combination with the third aspect, or the first possible implementation manner of the third aspect, or the second possible implementation manner of the third aspect, or the third possible implementation manner of the third aspect, or the fourth possible implementation manner of the third aspect, in a fifth possible implementation manner of the third aspect, the apparatus further includes:
a padding unit, configured to pad an original information bit of data or signaling whose length is smaller than a datum length and which is transmitted by the downlink channel to be transmitted by the first transmitting unit, for enabling the length of the padded data or signaling to reach the datum length.

In a fourth aspect, a base station is provided, including a transceiver and a processor, wherein,
the processor is configured to transmit a downlink channel to a terminal through the transceiver according to transmission information of the downlink channel, receive a feedback channel transmitted by the terminal through the transceiver according to transmission information of the feedback channel, and combine and decode the feedback channel, wherein the feedback channel is used by the terminal to feed back a receiving acknowledgement ACK to the base station after correctly receiving the downlink channel.

In combination with the fourth aspect, in a first possible implementation manner of the fourth aspect,
the processor is specifically configured to, when the transmission information of the downlink channel includes number of transmissions of the downlink channel, transmit the downlink channel to the terminal through the transceiver according to the number of transmissions of the downlink channel, and when the transmission information of the feedback channel includes number of transmissions of the feedback channel, receive the feedback channel transmitted by the terminal according to the number of transmissions of the feedback channel.

In combination with the fourth aspect, or the first possible implementation manner of the fourth aspect, in a second possible implementation manner of the fourth aspect,
a preset relationship exists between the feedback channel transmitted by the terminal and received by the processor through the transceiver and the downlink channel; a time domain and frequency domain resource of the feedback channel corresponds to a time domain and frequency domain resource of the downlink channel;
wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

In combination with the fourth aspect, or the first possible implementation manner of the fourth aspect, in a third possible implementation manner of the fourth aspect,
a time domain resource, or a frequency domain resource, or a time domain and frequency domain resource of the feedback channel transmitted by the terminal and received by the processor through the transceiver is a time domain resource, or a frequency domain resource, or a time domain and frequency domain resource notified by the base station through the downlink channel.

In combination with the first possible implementation manner of the fourth aspect, or the second possible implementation manner of the fourth aspect, or the third possible implementation manner of the fourth aspect, in a fourth possible implementation manner of the fourth aspect, the processor is specifically configured to receive the feedback channel repeatedly transmitted by the terminal after transmitting all downlink channels through the transceiver, or receive the feedback channel repeatedly transmitted by the terminal after transmitting a part of the downlink channels through the transceiver;
wherein, the receiving the feedback channel repeatedly transmitted by the terminal after a part of the downlink channels are repeatedly transmitted, is specifically as follows: dividing all downlink channels to be repeatedly transmitted into multiple groups, and receiving the feedback channel repeatedly transmitted by the terminal after each group of downlink channels is repeatedly transmitted, until the ACK is received or the multiple groups of downlink channels are transmitted.

In combination with the fourth aspect, or the first possible implementation manner of the fourth aspect, or the second possible implementation manner of the fourth aspect, or the third possible implementation manner of the fourth aspect, or the fourth possible implementation manner of the fourth aspect, in a fifth possible implementation manner of the fourth aspect,
the processor is further configured to, before transmitting the downlink channel through the transceiver, pad an original information bit of data or signaling whose length is smaller than a datum length and which is transmitted by the downlink channel, for enabling the length of the padded data or signaling to reach the datum length.

In a fifth aspect, another channel transmission apparatus is provided, including:
a second receiving unit, configured to receive a downlink channel transmitted by a base station according to transmission information of the downlink channel;
a second combining and decoding unit, configured to combine and blindly decode the downlink channel received by the second receiving unit; and
a second transmitting unit, configured to transmit a feedback channel to the base station according to the transmission information of the feedback channel, wherein the feedback channel is used by the terminal to feed back ACK to the base station after the terminal determines, according to a blind decoding result of the second combining and decoding unit, that the downlink channel is received correctly.

In combination with the fifth aspect, in a first possible implementation manner of the fifth aspect,
the second receiving unit is specifically configured to, when the transmission information of the downlink channel includes number of transmissions of the downlink channel, receive the downlink channel transmitted by the base station according to the number of transmissions of the downlink channel; and
the second transmitting unit is specifically configured to, when the transmission information of the feedback channel includes number of transmissions of the feedback channel, transmit the feedback channel to the base station according to the number of transmissions of the feedback channel.

In combination with the fifth aspect, or the first possible implementation manner of the fifth aspect, in a second possible implementation manner of the fifth aspect,
a preset relationship exists between the feedback channel transmitted by the second transmitting unit and the downlink channel received by the second receiving unit;
wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

In combination with the fifth aspect, or the first possible implementation manner of the fifth aspect, in a third possible implementation manner of the fifth aspect, a time domain resource, or a frequency domain resource, or a time domain and frequency domain resource of the feedback channel transmitted by the second transmitting unit is a time domain resource, or a frequency domain resource, or a time domain and frequency domain resource notified by the base station through the downlink channel.

In combination with the fifth aspect, or the first possible implementation manner of the fifth aspect, or the second possible implementation manner of the fifth aspect, or the third possible implementation manner of the fifth aspect, in a fourth possible implementation manner of the fifth aspect, the second transmitting unit is specifically configured to repeatedly transmit the feedback channel to the base station after the base station repeatedly transmits all downlink channels, or repeatedly transmit the feedback channel to the base station after the base station repeatedly transmits a part of downlink channels; wherein,
the repeatedly transmitting the feedback channel to the base station after the base station repeatedly transmits a part of the downlink channels, is specifically as follows: repeatedly transmitting the feedback channel to the base station , after the base station divides all downlink channels to be repeatedly transmitted into multiple groups and each group of downlink channels is repeatedly transmitted.

In combination with the fifth aspect, or the first possible implementation manner of the fifth aspect, or the second possible implementation manner of the fifth aspect, or the third possible implementation manner of the fifth aspect, or the fourth possible implementation manner of the fifth aspect, in a fifth possible implementation manner of the fifth aspect, data or signaling transmitted by the downlink channel received by the second receiving unit is the data or signaling obtained by the base station by padding an original information bit of the data or signaling whose length is smaller than a datum length to enable the length to reach the datum length, and packet header information of the padded data or signaling includes at least one piece of the following information: an original length of the data or signaling, and a type of the data or signaling;
the second combining and decoding unit is specifically configured to decode the combined downlink channel according to the datum length of the data or signaling;
the apparatus further includes:
   a reading unit, configured to, after the blind decoding of the second combining and decoding unit is correct, read the packet header information of the data or signaling to obtain original information of the data or signaling.

In a sixth aspect, a terminal is provided, including a radio transceiver and a processor, wherein,
the processor is configured to receive a downlink channel transmitted by a base station through the radio transceiver according to transmission information of the downlink channel, combine and blindly decode the downlink channel, and transmit a feedback channel to the base station through the radio transceiver according to transmission information of the feedback channel, wherein the feedback channel is used by the terminal to feed back ACK to the base station after the terminal determines, according to a blind decoding result, that the downlink channel is correctly received.

In combination with the sixth aspect, in a first possible implementation manner of the sixth aspect,
the processor is specifically configured to, when the transmission information of the downlink channel includes number of transmissions of the downlink channel, receive the downlink channel transmitted by the base station through the radio transceiver according to the number of transmissions of the downlink channel, and when the transmission information of the feedback channel includes number of transmissions of the feedback channel, transmit the feedback channel to the base station through the radio transceiver according to the number of transmissions of the feedback channel.

In combination with the sixth aspect, or the first possible implementation manner of the sixth aspect, in a second possible implementation manner of the sixth aspect, a preset relationship exists between the feedback channel transmitted by the processor through the radio transceiver and the downlink channel;
wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

In combination with the sixth aspect, or the first possible implementation manner of the sixth aspect, in a third possible implementation manner of the sixth aspect, a time domain resource, or a frequency domain resource, or a time domain and frequency domain resource of the feedback channel transmitted by the processor through the radio transceiver is a time domain resource, or a frequency domain resource, or a time domain and frequency domain resource notified by the base station through the downlink channel.

In combination with the sixth aspect, or the first possible implementation manner of the sixth aspect, or the second possible implementation manner of the sixth aspect, or the third possible implementation manner of the sixth aspect, in a fourth possible implementation manner of the sixth aspect, the processor is specifically configured to repeatedly transmit the feedback channel to the base station through the radio transceiver after the base station repeatedly transmits all downlink channels, or repeatedly transmit the feedback channel to the base station through the radio transceiver after the base station repeatedly transmits a part of downlink channels; wherein,
the repeatedly transmitting the feedback channel to the base station through the radio transceiver after the base station repeatedly transmits a part of the downlink channels, is specifically as follows: repeatedly transmitting the feedback channel to the base station through the radio transceiver after each group of downlink channels is repeatedly transmitted, after the base station divides all downlink channels to be repeatedly transmitted into multiple groups and each group of downlink channels is repeatedly transmitted.

In combination with the sixth aspect, or the first possible implementation manner of the sixth aspect, or the second possible implementation manner of the sixth aspect, or the third possible implementation manner of the sixth aspect, or the fourth possible implementation manner of the sixth aspect, in a fifth possible implementation manner of the sixth aspect, data or signaling transmitted by the downlink channel received by the processor through the radio transceiver is the data or signaling obtained by the base station by padding an original information bit of the data or signaling smaller than a datum length to enable the length to reach the datum length, and the packet header information of the padded data or signaling includes at least one piece of the following information: an original length of the data or signaling, and a type of the data or signaling;
the processor is specifically configured to decode the combined downlink channel according to the datum length of the data or signaling;
and the processor is further configured to, when the blind decoding is correct, read the packet header information of the data or signaling to obtain original information of the data or signaling.

In the embodiments of the present invention, the base station transmits the downlink channel to the terminal according to the transmission information of the downlink channel, the terminal combines and blindly decodes the received downlink channel, the terminal transmits the feedback channel to the base station after determining that the downlink channel is correctly received according to the blind decoding result, and the base station combines and decodes the feedback channel after receiving the feedback channel transmitted by the terminal according to the transmission information of the feedback channel. The embodiments of the present invention are applied in a network combining M2M with an LTE communication system. By means of the feature that the transmission of data or signaling for the terminals is small in the M2M, when scheduling the terminal, the base station does not need to send the downlink control channel before sending the downlink data channel, but directly transmits one downlink channel, thus the system overhead is reduced; correspondingly, for the terminals in the M2M, since these terminals do not need to detect a large amount of control channels to obtain the data channel, but only need to detect one kind of downlink channel to obtain corresponding data or signaling, the electric energy of the terminals is saved.

### BRIEF DESCRIPTION OF THE DRAWINGS

To illustrate technical solutions in the embodiments of the present invention or in the prior art more clearly, a brief introduction on the accompanying drawings which are needed in the description of the embodiments or the prior art is given below. Apparently, the accompanying drawings in the description below are merely some of the embodiments of the present invention, based on which other drawings may be obtained by those of ordinary skill in the art without any creative effort.
Fig.1 is a flow chart of an embodiment of a channel transmission method in the present invention;
Fig.2 is a flow chart of another embodiment of a channel transmission method in the present invention;
Fig.3 is a flow chart of another embodiment of a channel transmission method in the present invention;
Fig.4 is a block diagram of an embodiment of a channel transmission apparatus in the present invention;
Fig.5 is a block diagram of another embodiment of a channel transmission apparatus in the present invention;
Fig.6 is a block diagram of an embodiment of a base station in the present invention;
Fig.7 is a block diagram of another embodiment of a channel transmission apparatus in the present invention;
Fig.8 is a block diagram of an embodiment of a terminal in the present invention.

### DETAILED DESCRIPTION OF THE EMBODIMENTS

In order that those skilled in the art may better understand the technical solutions in the embodiments of the present invention and that the above-mentioned purposes, characteristics and advantages of the embodiments of the present invention are more obvious and understandable, a further detailed description of the technical solutions in the embodiments of the present invention will be given below in combination with the accompanying drawings.

When an existing LTE communication system is combined with an M2M network, if a base station needs to schedule an MTC terminal, in order to reinforce the coverage, a channel needs to be repeatedly transmitted for multiple times, for enabling the MTC terminal to combine multiple copies of received information to accumulate enough gain to correctly receive and read information sent on the channel. For example, a control channel needs to be received for multiple times and the received control channels needs to be combined , and after the decoding is correct, multiple received data channels are combined, demodulated and decoded according to the information indicated by the control channel to obtain information carried by the data channels. Since a data packet included in the data channel transmitted by the terminal in the LTE system is large and has one length of multiple lengths, and the frequency domain position of the data packet has multiple possibility, electricity of the terminal will be wasted by directly detecting the data channel. Moreover, information included in the control channel is little. Thus the control channel needs to be transmitted to accurately notify the information of the data channel in order that the data channel is received directly.

For a terminal with coverage needing to be reinforced, if being still in accordance with the scheduling manner of the terminal in the LTE system , a base station repeatedly transmits a control channel at multiple subframes for multiple times to reinforce the coverage. Since each subframe may hold multiple control channels, each terminal attempts to detect one by one all control channels on which the each terminal can be scheduled at each subframe, to obtain the control channel for scheduling itself. This process is generally called blind detection, and generally, one terminal performs the blind detection on each subframe for 44 times or more. When a control channel needs to be repeatedly transmitted in multiple subframes, for example, 10 times, the terminal needs to perform the blind detection for 44¹⁰ ≈ 2.72 × 10¹⁶ times at most. And for the highest coverage reinforcement, as many as 100 repeated transmissions may need to be performed, and then, the terminal performs the blind detection for 44¹⁰⁰ times at most. If being still in accordance with the scheduling manner of the terminal in the LTE system, system overhead is overlarge, electric energy of the MTC terminal is greatly wasted, and complexity of the MTC terminal is greatly increased or even the MTC terminal could not be achieved. In order to solve the above-mentioned technical problems, the method provided by the embodiments of the present invention is adopted, and the purposes of reducing the system overhead, saving the electric energy of the terminal and reducing the complexity of the terminal may be achieved just by transmitting a downlink channel without sending a downlink control channel before sending a downlink data channel.

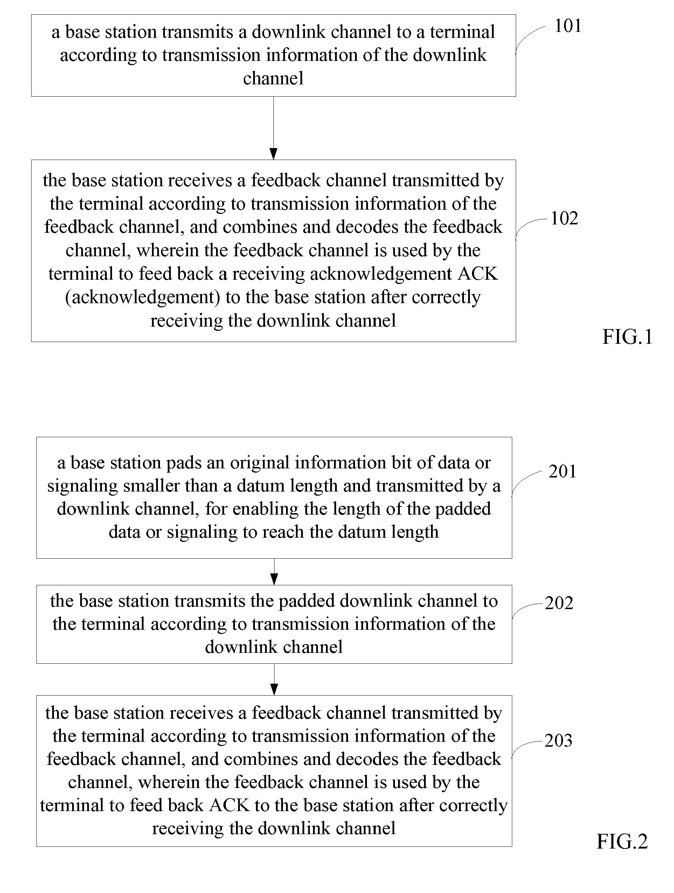

See Fig.1, it is a flow chart of an embodiment of a channel transmission method in the present invention.

Step 101, a base station transmits a downlink channel to a terminal according to transmission information of the downlink channel.

In this embodiment, the transmission information of the downlink channel may be notified by the base station to the terminal. The transmission information of the downlink channel may include the number of transmissions of the downlink channel. The base station may determine the number of transmissions of the downlink channel according to a target block error ratio (Block Error Ratio, BLER), channel quality of the terminal and service demands of the terminal, wherein the target BLER may be a BLER of a channel in the existing LTE communication system after performing hybrid automatic repeat request (Hybrid Automatic Repeat Request, HARQ) retransmission, or a target BLER set by the communication system.

Optionally, the transmission information of the downlink channel may further include at least one piece of the following information: a time domain resource, or a frequency domain resource, or a time domain and frequency domain resource which capable being selected to be occupied by the downlink channel; a time domain resource, or a frequency domain resource, or a time domain and frequency domain resource used by the terminal for transmitting the feedback channel; a modulation format adopted by the downlink channel; an encoding format adopted by the downlink channel. When the transmission information of the downlink channel does not include the above-mentioned information, the terminal may receive the downlink channel transmitted by the base station according to a time domain resource, or a frequency domain resource, or a time domain and frequency domain resource appointed with the base station, or the terminal may transmit the feedback channel on a time domain resource, or a frequency domain resource, or a time domain and frequency domain resource appointed with the base station, or the terminal may decode the received downlink channel by adopting a preset modulation format or encoding format.

The time domain resource, or the frequency domain resource, or the time domain and frequency domain resource capable being selected to be occupied by the downlink channel refers to: if the base station transmits the downlink channel, one or multiple or all resources are selected from the time domain resource, or the frequency domain resource, or the time domain and frequency domain resource capable being selected to be occupied by the downlink channel to perform the transmission; correspondingly, the terminal performs reception, combination and detection on the time domain resource, or the frequency domain resource, or the time domain and frequency domain resource capable being selected to be occupied by the downlink channel.

In this embodiment, the downlink channel may be a downlink data channel used for transmitting data, for example, a physical downlink shared channel (Physical Downlink Shared Channel, PDSCH); or the downlink channel may be a downlink control channel used for transmitting signaling, for example, a physical downlink control channel (Physical Downlink Control Channel, PDCCH) or an enhanced physical downlink control channel (enhanced Physical Downlink Control Channel, EPDCCH); the signaling may include control signaling for scheduling uplink transmission, for example, uplink scheduling grant (UL grant) signaling or medium access control (Medium Access Control, MAC) signaling PDCCH order.

In this embodiment, the data or signaling transmitted by the base station through the downlink channel may be data or signaling in an existing LTE communication system which is repeatedly sent according to the number of repetitions directly. Or, packet header information may be added in the data or signaling, wherein the packet header information may include the type of the downlink channel transmitting the data or signaling. For example, a bit "1" may be used for expressing that the transmission type is data, and a bit "0" may be used for expressing that the transmission type is signaling.

When the base station transmits the downlink channel to the terminal according to the transmission information of the downlink channel, correspondingly, the terminal may receive the downlink channel transmitted by the base station according to the transmission information of the downlink channel, and combine and decode or blind decode the received downlink channel which is repeatedly transmitted for multiple times.

The combining operation is to perform symbol-level (symbol-level) combining before demodulation or soft bit level (soft bit level) combining before decoding on the received channel, which is retransmitted for multiple times.

In this step, when there is a unique length for the data or signaling transmitted by the base station through the downlink channel, the terminal may directly decode the data or signaling. When there is more than one length for the data or signaling transmitted by the base station through the downlink channel, the terminal needs to respectively blind decode multiple lengths. The blind decoding operation is to perform one-by-one decoding attempt on the combined signal according to all possible lengths of the data or signaling. After the decoding is correct, the feedback channel is transmitted to the base station to feed back a receiving acknowledgement ACK. Wherein, the decoding includes cyclical redundancy check (Cyclical Redundancy Check, CRC).

If the CRC is not passed, it maybe result from that the base station does not transmit the downlink channel, or that the base station transmits the downlink channel but the terminal does not successfully receive the downlink channel. These conditions are receiving negative acknowledgement NACK (Negative Acknowledgement), thus the terminal does not transmit the feedback channel to the base station.

Particularly, when the data has *N*₁ lengths, the signaling has *N*₂ lengths, and these lengths are unequal, type information may be directly obtained through the lengths. Then, although the downlink channel may carry multiple types of information, for example, data or signaling, but no packet header information indication is needed, and the terminal may determine which type of information is transmitted by the downlink channel through the length of the data or signaling obtained after the blind decoding is correct.

Step 102: the base station receives a feedback channel transmitted by the terminal according to transmission information of the feedback channel, and combines and decodes the feedback channel, wherein the feedback channel is used by the terminal to feed back a receiving acknowledgement ACK (acknowledgement) to the base station after correctly receiving the downlink channel.

After the base station transmits the downlink channel to the terminal, the terminal will combine and decode or blind decode the received downlink channel. If the data or signaling has multiple possible lengths, the terminal needs to respectively attempt to decode the combined downlink channel according to different lengths, namely, perform blind decoding. After the decoding is correct, the feedback channel is transmitted to the base station in order to feed back the receiving acknowledgement ACK. The decoding includes cyclical redundancy check (Cyclical Redundancy Check, CRC).

In this embodiment, the transmission information of the feedback channel may include the number of transmissions of the feedback channel. Optionally, the transmission information of the feedback channel further includes at least one piece of the following information: a time domain resource, or a frequency domain resource, or a time domain and frequency domain resource occupied by the feedback channel; a modulation format adopted by the feedback channel; an encoding format adopted by the feedback channel. When the transmission information of the feedback channel does not include the above-mentioned information, the base station may receive the feedback channel transmitted by the terminal according to a time domain resource, or a frequency domain resource, or a time domain and frequency domain resource appointed with the terminal, or the base station may decode the received feedback channel by adopting a preset modulation format or encoding format.

A preset relationship exists between the feedback channel transmitted by the terminal and the downlink channel; the preset relationship includes: a time domain resource transmitting the feedback channel corresponds to a time domain resource transmitting the downlink channel, or a frequency domain resource transmitting the feedback channel corresponds to a frequency domain resource transmitting the downlink channel, or a time domain and frequency domain resource transmitting the feedback channel corresponds to a time domain and frequency domain resource transmitting the downlink channel. Or, the time domain resource, or the frequency domain resource, or the time domain and frequency domain resource of the feedback channel transmitted by the terminal is the time domain resource, or the frequency domain resource, or the time domain and frequency domain resource notified by the base station; specifically, the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

Specifically, the base station may receive the feedback channel repeatedly transmitted by the terminal after all downlink channels are repeatedly transmitted, or the base station may also receive the feedback channel repeatedly transmitted by the terminal after a part of the downlink channels are repeatedly transmitted. Wherein, the receiving, by the base station, the feedback channel repeatedly transmitted by the terminal after a part of the downlink channels are repeatedly transmitted, may be specifically as follows: the base station divides all downlink channels to be repeatedly transmitted into multiple groups, and receives the feedback channel repeatedly transmitted by the terminal after the first group of downlink channels is transmitted; if the base station obtains the receiving acknowledgement ACK of the terminal by combining and decoding, the base station stops repeatedly transmitting the downlink channels; if not obtaining the receiving acknowledgement ACK of the terminal by decoding, the base station repeatedly transmits the second group of downlink channels, and receives the feedback channel repeatedly transmitted by the terminal after transmitting the second group of downlink channels; if the base station obtains the receiving acknowledgement ACK of the terminal by combining and decoding, the base station stops repeatedly transmitting the downlink channels; if not obtaining the receiving acknowledgement ACK of the terminal by decoding, the base station transmits the third group of downlink channels, and so on, until the receiving acknowledgement ACK transmitted by the terminal is received, or all downlink channels are repeatedly transmitted.

Similarly, when there is more than one length for the data or signaling transmitted by the base station through the downlink channel, the terminal needs to respectively perform blind decoding on multiple lengths. Different lengths of the data or signaling may need different numbers of repetitions to achieve the same receiving signal to noise ratio. For example, a length 2 is larger than a length 1, then the possible necessary number of repetitions of the length 2 is larger than that of the length 1. One method is as follows: the number of repetitions of the data or signaling with all lengths is the same, and the data or signaling is repeatedly transmitted according to the number of repetitions of the data or signaling with the largest length, then the feedback channel repeatedly transmitted by the terminal is received, and the base station detects whether the terminal sends the receiving acknowledgement ACK by combining and decoding. If {*R*₁, *R*₂,···Rk} repetitions are needed in total resulting from that the data or signaling has more than one length, wherein k is a natural number and *k* ≥ 2, when the base station transmits the downlink channel according to the number of repetitions *Rₓ (2≤x≤k),* one method is that the base station repeatedly transmits the downlink channel for *Rₓ* times and then receives the feedback channel repeatedly transmitted by the terminal, and the base station detects whether the terminal sends the receiving acknowledgement ACK by combining and decoding; another method is that the base station respectively sends the downlink channel in groups according to such number of repetitions as {*R₁*}, {*R*₂-*R*₁}, {*R*₃-*R*₂}, ..., {*R*ₓ-*R*ₓ₋₁}. After each group of downlink channels is transmitted, the base station receives the feedback channel repeatedly transmitted by the terminal. If the base station obtains the receiving acknowledgement ACK of the terminal by combining and decoding, the base station stops repeatedly transmitting the rest group(s) of downlink channels; if not obtaining the receiving acknowledgement ACK of the terminal by decoding, the base station repeatedly transmits the next group of downlink channels, and so on, until that the receiving acknowledgement ACK transmitted by the terminal is received, or that all groups of downlink channels are transmitted.

Thus it can be seen from the above-mentioned embodiment that, when the channel needs to be repeatedly transmitted for multiple times to reinforce the coverage, the embodiment is applied in a network combining M2M with an LTE communication system, which overcomes the problems of overlarge system overhead, high power consumption of the terminal and greatly increased complexity, as a result of that the base station needs to repeatedly transmit the control channel for multiple times, and the terminal receives, combines and blindly detects the control channel for multiple times due to direct adoption of LTE technology. By means of the feature of small transmission data or signaling of the terminals in the M2M, when scheduling the terminal, the base station does not need to send the downlink control channel before sending the downlink data channel, but directly transmits one kind of downlink channel, thus the system overhead is reduced; meanwhile, due to lack of the traditional HARQ (hybrid automatic repeat request), the base station combines multiple transmissions of the HARQ and sends the same to achieve the target BLER at one time, thus the number of repeated transmissions of the base station may be greatly decreased to further save the system overhead; correspondingly, for terminals in the M2M, since these terminals do not need to detect a large amount of control channels to obtain the data channel, but only needs to detect one kind of downlink channel to obtain corresponding data or signaling, thereby saving the electric energy of the terminal and reducing the complexity of the terminal; meanwhile, the ACK only needs to be fed back for one time after receiving the all, thus further saving the electric energy of the terminal and reducing the complexity of the terminal.

See Fig.2, it is a flow chart of another embodiment of a channel transmission method in the present invention:
step 201: a base station pads an original information bit of data or signaling smaller than a datum length and transmitted by a downlink channel, for enabling the length of the padded data or signaling to reach the datum length.

In this embodiment, the data or signaling transmitted by the base station through the downlink channel may be data or signaling in an existing LTE communication system which is repeatedly sent according to the number of repetitions directly. Or, packet header information may be added in the data or signaling, wherein the packet header information may include the type of the downlink channel transmitting the data or signaling. For example, a bit "1" may be used for expressing that the transmission type is data, and a bit "0" may be used for expressing that the transmission type is signaling.

In this step, when there is more than one length for the data or signaling transmitted by the base station through the downlink channel, the terminal needs to respectively perform blind decoding on multiple lengths. The blind decoding operation is to perform one-by-one decoding attempt on the combined signal according to all possible lengths of the data or signaling. When the decoding is correct, the feedback channel is transmitted to the base station to feed back a receiving acknowledgement ACK. The decoding includes cyclical redundancy check (Cyclical Redundancy Check, CRC).

If the CRC is not passed, it maybe result from that the base station does not transmit the downlink channel, or that the base station transmits the downlink channel but the terminal does not successfully receive the downlink channel The above-mentioned conditions are receiving negative acknowledgement NACK (Negative Acknowledgement), thus the terminal does not transmit the feedback channel to the base station.

In order to reduce the number of blind decodings, one or multiple fixed datum lengths may be set. When the length of the original information bit of the data or signaling is smaller than the datum length, the original information bit of the data or signaling may be padded, for enabling the length of the padded data or signaling to reach the datum length. During padding, the base station may pad the data or signaling according to a pre-defined datum length. For example, the pre-defined datum lengths includes 20 bytes, 40 bytes, 80 bytes and the like, then the data or signaling is padded to be uniform with the padding length to which the original length of the data or signaling is close. For example, the original length of certain data is 36 bytes, which is larger than the datum length 20 bytes and is smaller than the datum length 40 bytes, then the data is padded to 40 bytes. If only one datum length is set, all data or signaling not equal to the datum length is padded to the datum length. For example, the datum length is 100 bytes, the data to be transmitted is 36 bytes, and then the data is padded to 100 bytes.

After padding the data or signaling, the base station may further carry the original length of the data or signaling in the packet header information, in order that the data or signaling is correctly extracted after decoding. For example, the original bit of the data or signaling has N lengths, then ┌log₂*N*┐ bits are needed to express the N lengths, wherein ┌ ┐ expresses rounding up to an integer. For example, N=3, then the ┌log₂ 3┐ = 2 bits, there are four states: 00, 01, 10, 11, and any three states may be selected from the four states to express three lengths. When the packet header information carries both the type information and the length information, the two kinds of information may be used for joint encoding. For example, there are M kinds of type information and N kinds of length information, then the packet header needs ┌log₂(N×*M*)┐ bits at most, but the bits will be saved in joint encoding. For example, a certain length may only be one type, then the number of actual possible conditions is decreased from *N×M* to *N×M-M*+1, and the packet header actually needs ┌log₂(*N×M-M*+1)┐ bits.

Particularly, when the data has *N*₁ lengths, the signaling has *N*₂ lengths, and these lengths are unequal, then the type information may be directly acquired through the lengths, and the number of actual possible conditions is decreased from *N×M* to *N*, thus the packet header actually needs ┌log₂*N*┐ bits.

Step 202: the base station transmits the padded downlink channel to the terminal according to transmission information of the downlink channel.

In this embodiment, the transmission information of the downlink channel may be notified by the base station to the terminal. The transmission information of the downlink channel may include the number of transmissions of the downlink channel. The base station may determine the number of transmissions of the downlink channel according to BLER, channel quality of the terminal and service demands of the terminal, wherein the target BLER may be a BLER of a channel in the existing LTE communication system after performing HARQ retransmission, or a target BLER set by the communication system.

Optionally, the transmission information of the downlink channel may further include at least one piece of the following information: a time domain resource, or a frequency domain resource, or a time domain and frequency domain resource which capable being selected to be occupied by the downlink channel; a time domain resource, or a frequency domain resource, or a time domain and frequency domain resource used by the terminal for transmitting the feedback channel; a modulation format adopted by the downlink channel; an encoding format adopted by the downlink channel. When the transmission information of the downlink channel does not include the above-mentioned information, the terminal may receive the downlink channel transmitted by the base station according to a time domain resource, or a frequency domain resource, or a time domain and frequency domain resource appointed with the base station, or the terminal may transmit the feedback channel on a time domain resource, or a frequency domain resource, or a time domain and frequency domain resource appointed with the base station, or the terminal may decode the received downlink channel by adopting a preset modulation format or encoding format.

The time domain resource, or the frequency domain resource, or the time domain and frequency domain resource capable being selected to be occupied by the downlink channel refers to: if the base station transmits the downlink channel, one or multiple or all resources are selected from the time domain resource, or the frequency domain resource, or the time domain and frequency domain resource capable being selected to be occupied by the downlink channel; correspondingly, the terminal performs reception combination and detection on the time domain resource, or the frequency domain resource, or the time domain and frequency domain resource capable being selected to be occupied by the downlink channel.

In this embodiment, the downlink channel may be a downlink data channel used for transmitting data, for example, PDSCH, or may be a downlink control channel used for transmitting signaling, for example, PDCCH, EPDCCH; wherein, the signaling may include control signaling for scheduling uplink transmission, for example, uplink scheduling grant (UL grant) signaling or MAC signaling PDCCH order.

When the base station transmits the downlink channel to the terminal according to the transmission information of the downlink channel, correspondingly, the terminal may receive the downlink channel transmitted by the base station according to the transmission information of the downlink channel, and combine and decode or blindly decode the received downlink channel.

Step 203: the base station receives a feedback channel transmitted by the terminal according to transmission information of the feedback channel, and combines and decodes the feedback channel, wherein the feedback channel is used by the terminal to feed back ACK to the base station after correctly receiving the downlink channel.

The combining operation is to perform symbol-level (symbol-level) combining before demodulation or soft bit level (soft bit level) combining before decoding on the received channel which is retransmitted for multiple times.

After the base station transmits the downlink channel to the terminal, the terminal will combine and decode or blindly decode the received downlink channel, and transmits the feedback channel to the base station to feed back the ACK after the decoding is correct. The decoding includes CRC. During the CRC, if there are multiple pre-defined datum lengths, the terminal needs to respectively perform decoding attempt, namely, blind decoding, on the combined downlink channel according to different datum lengths. If the decoding check is passed, the ACK is fed back to the base station by transmitting the feedback channel, and if not, the terminal discards the combined downlink channel.

In this embodiment, the transmission information of the feedback channel may include the number of transmissions of the feedback channel. Optionally, the transmission information of the feedback channel further includes at least one piece of the following information: a time domain resource, or a frequency domain resource, or a time domain and frequency domain resource occupied by the feedback channel; a modulation format adopted by the feedback channel; an encoding format adopted by the feedback channel. When the transmission information of the feedback channel does not include the above-mentioned information, the base station may receive the feedback channel transmitted by the terminal according to a time domain resource, or a frequency domain resource, or a time domain and frequency domain resource appointed with the terminal, or the base station may decode the received feedback channel by adopting a preset modulation format or encoding format.

A preset relationship exists between the feedback channel transmitted by the terminal and the downlink channel; the preset relationship includes: the time domain resource for transmitting the feedback channel corresponds to the time domain resource for transmitting the downlink channel, or the frequency domain resource for transmitting the feedback channel corresponds to the frequency domain resource for transmitting the downlink channel, or the time domain and frequency domain resource for transmitting the feedback channel corresponds to the time domain and frequency domain resource for transmitting the downlink channel. Or, the time domain resource, or the frequency domain resource, or the time domain and frequency domain resource of the feedback channel transmitted by the terminal is the time domain resource, or the frequency domain resource, or the time domain and frequency domain resource notified by the base station; specifically, the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

If there is only one datum length for padding in step 201, the base station may receive the feedback channel repeatedly transmitted by the terminal after all downlink channels are repeatedly transmitted, or the base station may also receive the feedback channel repeatedly transmitted by the terminal after a part of the downlink channels are repeatedly transmitted. Wherein, the receiving, by the base station, the feedback channel repeatedly transmitted by the terminal after a part of the downlink channels is repeatedly transmitted, may be specifically as follows: the base station divides all downlink channels to be repeatedly transmitted into multiple groups, and receives the feedback channel repeatedly transmitted by the terminal after the first group of downlink channels is transmitted; if the base station obtains the receiving acknowledgement ACK of the terminal by combining and decoding, the base station stops repeatedly transmitting the downlink channels; if not obtaining the receiving acknowledgement ACK of the terminal by decoding, the base station repeatedly transmits the second group of downlink channels, and receives the feedback channel repeatedly transmitted by the terminal after transmitting the second group of downlink channels; if the base station obtains the receiving acknowledgement ACK of the terminal by combining and decoding, the base station stops repeatedly transmitting the downlink channels; if not obtaining the receiving acknowledgement ACK of the terminal by decoding, the base station repeatedly transmits the third group of downlink channels, and so on, until that the receiving acknowledgement ACK transmitted by the terminal is received, or that all downlink channels are repeatedly transmitted.

When there is more than one datum length for the data or signaling transmitted by the base station through the downlink channel, the terminal needs to respectively perform blind decoding on multiple lengths. Different datum lengths of the data or signaling may need different numbers of repetitions to achieve the same receiving signal to noise ratio. For example, a datum length 2 is larger than a datum length 1, then the possible necessary number of repetitions of the datum length 2 is larger than that of the datum length 1. If {*R*₁,*R₂*,···*R*ₖ} repetitions are needed in total resulting from that the data or signaling has more than one datum length, wherein k is a natural number and *k* ≥ 2 , when the base station transmits the downlink channel according to the number of repetitions *R*ₓ (*2≤x≤k),* one method is that the base station repeatedly transmits the downlink channel for *Rₓ* times and then receives the feedback channel repeatedly transmitted by the terminal, and the base station detects whether the terminal sends the receiving acknowledgement ACK by combining and decoding. another method is that the base station respectively sends the downlink channel in groups according to such number of repetitions as {*R*₁}, {*R*₂-*R*₁}, {*R*₃-*R*₂}, ..., {*R*ₓ-*R*ₓ₋₁}. After each group of transmissions of the downlink channel is transmitted, the base station receives the feedback channel repeatedly transmitted by the terminal; if the base station obtains the receiving acknowledgement ACK of the terminal by combining and decoding, the base station stops repeatedly transmitting the rest group(s) of downlink channels; if not obtaining the receiving acknowledgement ACK of the terminal by decoding, the base station repeatedly transmits the next group, and so on, until that the receiving acknowledgement ACK transmitted by the terminal is received, or that all groups of downlink channels are transmitted.

Thus it can be seen from the above-mentioned embodiment that, the embodiment is applied in a network combining M2M with an LTE communication system, by means of the feature of small transmission data or signaling of the terminals in the M2M, when scheduling the terminal, the base station does not need to send the downlink control channel before sending the downlink data channel, but directly transmits one kind of downlink channel, thus the system overhead is reduced; correspondingly, for terminals in the M2M, since these terminals do not need to detect a large amount of control channels to obtain the data channel, but only need to detect one kind of downlink channel to obtain corresponding data or signaling, thereby saving the electric energy of the terminals; in addition, in this embodiment, before the data channel is transmitted, the control channel does not need to be transmitted, thus the resources of the control channel in the system are saved; since the terminals may demodulate the received data channels at one time by combining, the resources of the data channels in the system are saved; moreover, compared with the prior art, the terminal does not need to feed back multiple pieces of information to the base station due to HARQ retransmission and only feeds back the ACK to the base station for one time after the CRC is correct, so that the feedback resources of the system are saved.

Corresponding to the embodiments of the channel transmission method described from the base station side in the present invention, the present invention further provides an embodiment of a channel transmission method described from a terminal side.

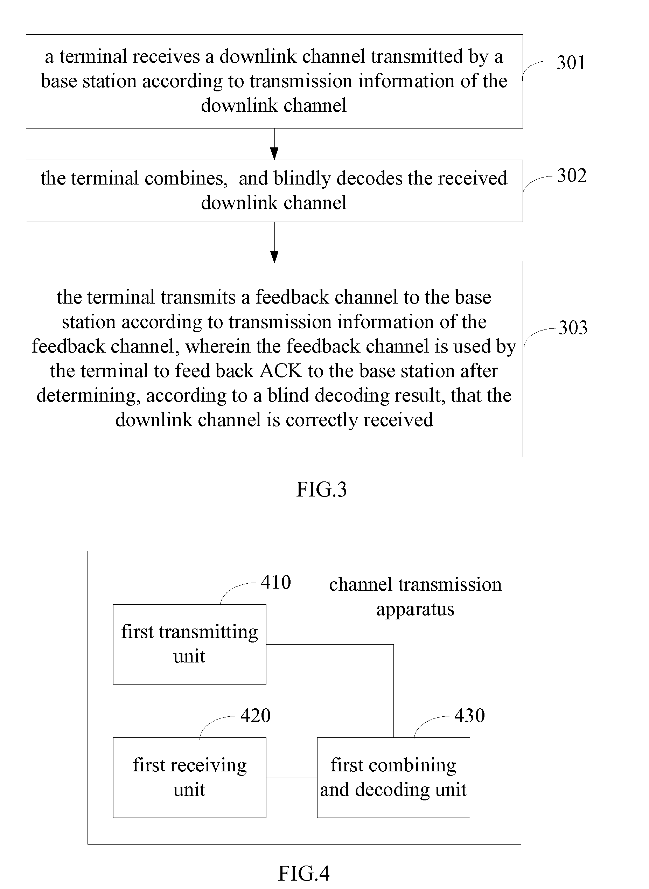

See Fig.3, it is a flow chart of another embodiment of a channel transmission method in the present invention:
step 301: a terminal receives a downlink channel transmitted by a base station according to transmission information of the downlink channel.

In this embodiment, the transmission information of the downlink channel may be notified by the base station to the terminal. The transmission information of the downlink channel may include the number of transmissions of the downlink channel. The base station may determine the number of transmissions of the downlink channel according to a BLER, channel quality of the terminal and service demands of the terminal, wherein the target BLER may be a BLER of a channel in the existing LTE communication system after performing HARQ retransmission, or a target BLER set by the communication system.

Optionally, the transmission information of the downlink channel may further include at least one piece of the following information: a time domain resource, or a frequency domain resource, or a time domain and frequency domain resource capable being selected to be occupied by the downlink channel; a time domain resource, or a frequency domain resource, or a time domain and frequency domain resource used by the terminal for transmitting the feedback channel; a modulation format adopted by the downlink channel; an encoding format adopted by the downlink channel; When the transmission information of the downlink channel does not include the above-mentioned information, the terminal may receive the downlink channel transmitted by the base station according to a time domain resource, or a frequency domain resource, or a time domain and frequency domain resource appointed with the base station, or the terminal may transmit the feedback channel on a time domain resource, or a frequency domain resource, or a time domain and frequency domain resource appointed with the base station, or the terminal may decode the received downlink channel by adopting a preset modulation format or encoding format.

In this embodiment, the downlink channel may be a downlink data channel used for transmitting data, for example, PDSCH, or may be a downlink control channel used for transmitting signaling, for example, PDCCH, EPDCCH; wherein, the signaling may include control signaling for scheduling uplink transmission, for example, uplink scheduling grant (UL grant) signaling or MAC signaling PDCCH order.

In this embodiment, the data or signaling transmitted by the base station through the downlink channel may be data or signaling in an existing LTE communication system which is repeatedly sent according to the number of repetitions directly. Or, packet header information may be added in the data or signaling, wherein the packet header information may include the type of the downlink channel for transmitting the data or signaling. For example, a bit "1" may be used for expressing that the transmission type is data, and a bit "0" may be used for expressing that the transmission type is signaling.

When there is more than one length for the data or signaling transmitted by the base station through the downlink channel, the terminal needs to blindly decode multiple lengths respectively. The blind decoding operation is to perform one-by-one decoding attempt on the combined signal according to all possible lengths of the data or signaling. When the decoding is correct, the feedback channel is transmitted to the base station to feed back a receiving acknowledgement ACK. The decoding includes cyclical redundancy check (Cyclical Redundancy Check, CRC).

If the CRC is not passed, it maybe result from that the base station does not transmit the downlink channel, or that the base station transmits the downlink channel but the terminal does not successfully receive the downlink channel. The above-mentioned conditions are receiving negative acknowledgement NACK (Negative Acknowledgement), thus the terminal does not transmit the feedback channel to the base station.

In order to reduce the number of blind decodings, one or multiple fixed datum lengths may be set. When the length of the original information bit of the data or signaling is smaller than the datum length, the original information bit of the data or signaling may be padded (padding), for enabling the length of the padded data or signaling to reach the datum length. During padding, the base station may pad the data or signaling according to a pre-defined datum length. For example, the pre-defined datum lengths includes 20 bytes, 40 bytes, 80 bytes and the like, then the data or signaling is padded to be uniform with the padding length to which the original length of the data or signaling is close. For example, the original length of certain data is 36 bytes, which is larger than the datum length 20 bytes and is smaller than the datum length 40 bytes, then the data is padded to 40 bytes. If only one datum length is set, all data or signaling not equal to the datum length is padded to the datum length. For example, the datum length is 100 bytes, the data to be transmitted is 36 bytes, and then the data is padded to 100 bytes.

After padding the data or signaling, the base station may further carry the original length of the data or signaling in the packet header information, in order that the data or signaling is extracted correctly after decoding. For example, the original bit of the data or signaling has N lengths, then ┌log₂ *N*┐ bits are needed to express the N lengths, wherein ┌ ┐ expresses rounding up to an integer. For example, N=3, then the ┌log₂ 3┐= 2 bits, there are four states: 00, 01, 10, 11, and any three states may be extracted from the four states to express three lengths. When the packet header information carries both the type information and the length information, the two kinds of information may be used for joint encoding. For example, there are M kinds of type information and N kinds of length information; the packet header needs ┌log₂(*N*×*M*)┐ bits at most, but the bits will be saved in joint encoding. For example, a certain length may only be one type, then number of actual possible conditions is decreased from *N*×*M* to *N×M-M*+1, and the packet header actually needs ┌log₂(*N*×*M-M*+1)┐ bits.

Particularly, when the data has *N*₁ lengths, the signaling has *N*₂ lengths, and these lengths are unequal, then the type information may be directly acquired through the lengths, the number of actual possible conditions is decreased from *N×M* to *N,* and the packet header actually needs ┌log₂ *N*┐ bits.

Step 302: the terminal combines, decodes and blindly decodes the received downlink channel.

When the base station transmits the downlink channel to the terminal according to the transmission information of the downlink channel, correspondingly, the terminal may receive the downlink channel transmitted by the base station according to the transmission information of the downlink channel, and combine and decode or blindly decode the received downlink channel which is repeatedly transmitted for multiple times.

The combining operation is to perform symbol-level (symbol-level) combining before demodulation or soft bit level (soft bit level) combining before decoding on the received channel, which is retransmitted for multiple times.

In this step, when there is a unique length for the data or signaling transmitted by the base station through the downlink channel, the terminal may directly decode the data or signaling. When there is more than one length for the data or signaling transmitted by the base station through the downlink channel, the terminal needs to blindly decode multiple lengths respectively. The blind decoding operation is to perform one-by-one decoding attempt on the combined signal according to all possible lengths of the data or signaling. When the decoding is correct, the feedback channel is transmitted to the base station to feed back a receiving acknowledgement ACK. The decoding includes cyclical redundancy check (Cyclical Redundancy Check, CRC).

If the CRC is not passed, it maybe result from that the base station does not transmit the downlink channel, or that the base station transmits the downlink channel but the terminal does not successfully receive the downlink channel. These conditions are receiving negative acknowledgement NACK (Negative Acknowledgement), thus the terminal does not transmit the feedback channel to the base station.

Particularly, when the data has *N*₁ lengths, the signaling has *N*₂ lengths, and these lengths are unequal, type information may be directly obtained through the lengths, then, although the downlink channel may carry multiple types of information, for example, data or signaling, but needs no packet header information indication, thus the terminal may determine which type of information is transmitted by the downlink channel through the length of the data or signaling obtained when the blind decoding is correct.

Optionally, when the blind decoding is correct, the terminal may read the packet head information of the data or signaling transmitted by the downlink channel, in order to obtain original information of the data or signaling.

Step 303, the terminal transmits a feedback channel to the base station according to transmission information of the feedback channel, wherein the feedback channel is used by the terminal to feed back ACK to the base station after determining, according to the decoding or blind decoding result, that the downlink channel is correctly received.

After determining, according to the decoding or blind decoding result, that the downlink channel is receibed correctly, the terminal transmits the feedback channel carrying the ACK to the base station according to the transmission information of the feedback channel. The decoding includes CRC. During the CRC, if the data or signaling has multiple lengths, the terminal needs to perform decoding check attempt on the combined downlink channel according to different lengths respectively; if the decoding check is passed, the ACK is fed back to the base station by transmitting the feedback channel; if not, the terminal discards the combined downlink channel.

In this embodiment, a preset relationship exists between the feedback channel transmitted by the terminal and the downlink channel; the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel. Or, a time domain resource, or a frequency domain resource, or a time domain and frequency domain resource of the feedback channel transmitted by the terminal is a time domain resource, or a frequency domain resource, or a time domain and frequency domain resource notified by the base station; specifically, the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

Optionally, the transmission information of the feedback channel further includes at least one piece of the following information: a time domain resource, or a frequency domain resource, or a time domain and frequency domain resource occupied by the feedback channel; a modulation format adopted by the feedback channel; an encoding format adopted by the feedback channel. When the transmission information of the feedback channel does not include the above-mentioned information, the base station may receive the feedback channel transmitted by the terminal according to a time domain resource, or a frequency domain resource, or a time domain and frequency domain resource appointed with the terminal, or the base station may decode the received feedback channel by adopting a preset modulation format or encoding format.

Specifically, the terminal may repeatedly transmit the feedback channel to the base station after the base station repeatedly transmits all downlink channels, or repeatedly transmit the feedback channel to the base station after the base station repeatedly transmits a part of downlink channels; wherein, the repeatedly transmitting the feedback channel to the base station after the base station transmits a part of the downlink channels, is specifically as follows: the base station divides all downlink channels to be repeatedly transmitted into multiple groups, and receives the feedback channel repeatedly transmitted by the terminal after the first group of downlink channels is transmitted; if the base station obtains the receiving acknowledgement ACK of the terminal by combining and decoding, the base station stops repeatedly transmitting the downlink channels, and if not obtaining the receiving acknowledgement ACK of the terminal by decoding, the base station repeatedly transmits the second group of downlink channels, and receives the feedback channel repeatedly transmitted by the terminal after transmitting the second group of downlink channels; if the base station obtains the receiving acknowledgement ACK of the terminal by combining and decoding, the base station stops repeatedly transmitting the downlink channels, and if not obtaining the receiving acknowledgement ACK of the terminal by decoding, the base station transmits the third group of downlink channels, and so on, until that the receiving acknowledgement ACK transmitted by the terminal is received, or that all downlink channels are repeatedly transmitted.

Thus it can be seen from the above-mentioned embodiment that, the embodiment is applied in a network combining M2M with an LTE communication system, by means of the feature of small transmission data or signaling of the terminals in the M2M, when scheduling the terminal, the base station does not need to send the downlink control channel before sending the downlink data channel, but directly transmits a kind of downlink channel, thus the system overhead is reduced; correspondingly, for the terminals in the M2M, since these terminals do not need to detect a large amount of control channels to obtain the data channel, but only need to detect one kind of downlink channel to obtain corresponding data or signaling, thereby saving the electric energy of the terminals; in addition, in this embodiment, before the data channel is transmitted, the control channel does not need to be transmitted, thus the resources of the control channel in the system are saved; since the terminal may demodulate the received data channels at one time by combining, the resources of the data channels in the system are saved; moreover, compared with the prior art, the terminal does not need to feed back multiple pieces of information to the base station due to HARQ retransmission and only feeds back the ACK to the base station for one time when the CRC is correct, so that the feedback resources of the system are saved.

Corresponding to the embodiments of the channel transmission method in the present invention, the present invention further provides embodiments of a channel transmission apparatus, a base station and a terminal.

See Fig.4, it is a block diagram of an embodiment of a channel transmission apparatus in the present invention.

The apparatus includes: a first transmitting unit 410, a first receiving unit 420 and a first combining and decoding unit 430.

The first transmitting unit 410 is configured to transmit a downlink channel to a terminal according to transmission information of the downlink channel;
the first receiving unit 420 is configured to receive a feedback channel transmitted by the terminal according to transmission information of the feedback channel, wherein the feedback channel is used by the terminal to feed back ACK to the base station after correctly receiving the downlink channel transmitted by the first transmitting unit 410; and
the first combining and decoding unit 430 is configured to combine and decode the feedback channel received by the first receiving unit 420.

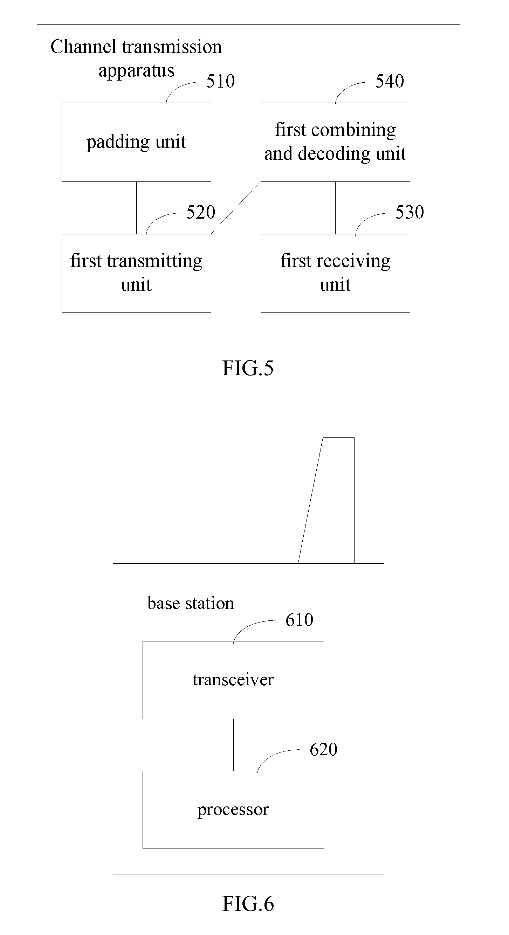

See Fig.5, it is a block diagram of another embodiment of a channel transmission apparatus in the present invention.

The apparatus includes: a padding unit 510, a first transmitting unit 520, a first receiving unit 530 and a first combining and decoding unit 540.

The padding unit 510 is configured to pad an original information bit of data or signaling whose length is smaller than a datum length and which is transmitted by a downlink channel to be transmitted by the first transmitting unit 520, for enabling the length of the padded data or signaling to reach the datum length;
the first transmitting unit 520 is configured to transmit the downlink channel to the terminal according to the transmission information of the downlink channel;
the first receiving unit 530 is configured to receive a feedback channel transmitted by the terminal according to the transmission information of the feedback channel, wherein the feedback channel is used by the terminal to feed back ACK to the base station after correctly receiving the downlink channel transmitted by the first transmitting unit 520; and
the first combining and decoding unit 540 is configured to combine and decode the feedback channel received by the first receiving unit 530.

Optionally, the first transmitting unit 520 may be specifically configured to, when the transmission information of the downlink channel includes number of transmissions of the downlink channel, transmit the downlink channel to the terminal according to the number of transmissions of the downlink channel;
optionally, the first receiving unit 530 may be specifically configured to, when the transmission information of the feedback channel includes number of transmissions of the feedback channel, receive the feedback channel transmitted by the terminal according to the number of transmissions of the feedback channel.

Optionally, a preset relationship exists between the feedback channel received by the first receiving unit 530 and the downlink channel transmitted by the first transmitting unit 520; wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

Optionally, the time domain resource, or the frequency domain resource, or the time domain and frequency domain resource of the feedback channel received by the first receiving unit 530 is the time domain resource, or the frequency domain resource, or the time domain and frequency domain resource notified by the first transmitting unit through the downlink channel.

Optionally, the first receiving unit 530 is specifically configured to receive the feedback channel repeatedly transmitted by the terminal after the first transmitting unit 520 repeatedly transmits all downlink channels, or receive the feedback channel repeatedly transmitted by the terminal after the first transmitting unit 520 repeatedly transmits a part of the downlink channels; wherein, the receiving the feedback channel repeatedly transmitted by the terminal after a part of the downlink channels are repeatedly transmitted, is specifically as follows: dividing all downlink channels to be repeatedly transmitted into multiple groups, and receiving the feedback channel repeatedly transmitted by the terminal after each group of downlink channels is repeatedly transmitted, until the ACK is received or the multiple groups of downlink channels are transmitted.

The apparatus for transmitting the downlink channel as shown in the above-mentioned Fig.4 and Fig.5 may be arranged in the base station.

See Fig.6, it is a block diagram of an embodiment of a base station in the present invention.

The base station includes a transceiver 610 and a processor 620.

The processor 620 is configured to transmit a downlink channel to a terminal through the transceiver 610 according to transmission information of the downlink channel, receive a feedback channel transmitted by the terminal through the transceiver 610 according to transmission information of the feedback channel, and combine and decode the feedback channel, wherein the feedback channel is used by the terminal to feed back a receiving acknowledgement ACK to the base station after correctly receiving the downlink channel.

Optionally, the processor 620 may be specifically configured to, when the transmission information of the downlink channel includes number of transmissions of the downlink channel, transmit the downlink channel to the terminal through the transceiver according to the number of transmissions of the downlink channel, and when the transmission information of the feedback channel includes number of transmissions of the feedback channel, receive the feedback channel transmitted by the terminal according to the number of transmissions of the feedback channel.

Optionally, a preset relationship exists between the feedback channel and the downlink channel, which are received and transmitted respectively by the processor 620 through the transceiver; a time domain and frequency domain resource of the feedback channel corresponds to a time domain and frequency domain resource of the downlink channel; the processor 620 may be specifically configured to, when the transmission information of the feedback channel includes number of transmissions of the feedback channel, receive the feedback channel transmitted by the terminal through the transceiver according to the number of transmissions of the feedback channel.

Optionally, a preset relationship exists between the feedback channel transmitted by the terminal and received by the processor 620 through the transceiver and the downlink channel; a time domain and frequency domain resource of the feedback channel corresponds to a time domain and frequency domain resource of the downlink channel; wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

Optionally, the time domain resource, or the frequency domain resource, or the time domain and frequency domain resource of the feedback channel transmitted by the terminal and received by the processor 620 through the transceiver is the time domain resource, or the frequency domain resource, or the time domain and frequency domain resource notified by the base station through the downlink channel.

Optionally, the processor 620 may be specifically configured to receive the feedback channel repeatedly transmitted by the terminal after transmitting all downlink channels through the transceiver, or receive the feedback channel repeatedly transmitted by the terminal after transmitting a part of the downlink channels through the transceiver; wherein, the receiving the feedback channel repeatedly transmitted by the terminal after a part of the downlink channels are repeatedly transmitted, is specifically as follows: dividing all downlink channels to be repeatedly transmitted into multiple groups, and receiving the feedback channel repeatedly transmitted by the terminal after each group of downlink channels is repeatedly transmitted, until the ACK is received or the multiple groups of downlink channels are transmitted.

Optionally, the processor 620 may be further configured to, before transmitting the downlink channel through the transceiver, pad an original information bit of data or signaling whose length is smaller than a datum length and which is transmitted by the downlink channel, for enabling the length of the padded data or signaling to reach the datum length.

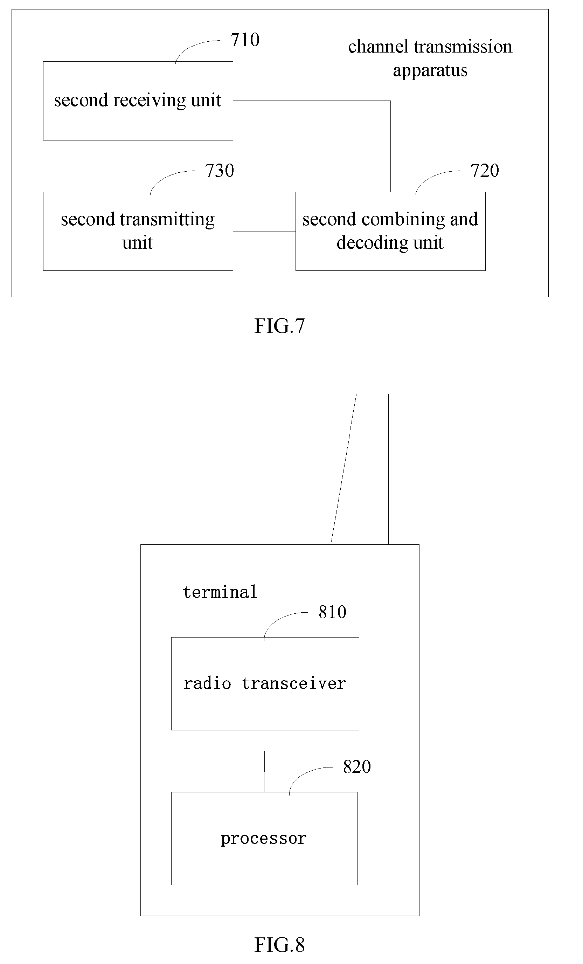

See Fig.7, it is a block diagram of another embodiment of a channel transmission apparatus in the present invention.

The apparatus includes: a second receiving unit 710, a second combining and decoding unit 720 and a second transmitting unit 730.

The second receiving unit 710 is configured to receive a downlink channel transmitted by a base station according to transmission information of the downlink channel;
the second combining and decoding unit 720 is configured to combine and decode or blindly decode the downlink channel received by the second receiving unit 710; and
the second transmitting unit 730 is configured to transmit a feedback channel to the base station according to the transmission information of the feedback channel, wherein the feedback channel is used by the terminal to feed back ACK to the base station after the terminal determines, according to a decoding result of the second combining and decoding unit 720, that the downlink channel is correctly received.

Optionally, the second receiving unit 710 may be specifically configured to, when the transmission information of the downlink channel includes number of transmissions of the downlink channel, receive the downlink channel transmitted by the base station according to the number of transmissions of the downlink channel; and the second transmitting unit 730 may be specifically configured to, when the transmission information of the feedback channel includes number of transmissions of the feedback channel, transmit the feedback channel to the base station according to the number of transmissions of the feedback channel.

Optionally, a preset relationship exists between the feedback channel transmitted by the second transmitting unit 730 and the downlink channel received by the second receiving unit 710; wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

Optionally, the time domain resource, or the frequency domain resource, or the time domain and frequency domain resource of the feedback channel transmitted by the second transmitting unit 730 is the time domain resource, or the frequency domain resource, or the time domain and frequency domain resource notified by the base station through the downlink channel.

Optionally, the second transmitting unit 730 may be specifically configured to repeatedly transmit the feedback channel to the base station after the base station repeatedly transmits all downlink channels, or repeatedly transmit the feedback channel to the base station after the base station repeatedly transmits a part of downlink channels; wherein, the repeatedly transmitting the feedback channel to the base station after the base station repeatedly transmits a part of the downlink channels, is specifically as follows: repeatedly transmitting the feedback channel to the base station, after the base station divides all downlink channels to be repeatedly transmitted into multiple groups and each group of downlink channels is repeatedly transmitted.

Optionally, the second transmitting unit 730 may be specifically configured to transmit the feedback channel to the base station on a time domain resource or a time domain and frequency domain resource when the transmission information of the downlink channel includes the time domain resource or the time domain and frequency domain resource of the feedback channel transmitted by the termina, or transmit the feedback channel to the base station on a time domain or time domain and frequency domain resource pre-appointed with the base station.

Optionally, data or signaling transmitted by the downlink channel received by the second receiving unit 710 is the data or signaling obtained by the base station by padding an original information bit of the data or signaling smaller than a datum length to enable the length to reach the datum length, and packet header information of the padded data or signaling includes at least one piece of the following information: an original length of the data or signaling, and a type of the data or signaling; the second combining and decoding unit 720 may be specifically configured to decode the combined downlink channel according to the datum length of the data or signaling; correspondingly, the apparatus may further include: a reading unit, configured to, when the decoding of the second combining and decoding unit is correct, read packet header information of the data or signaling to obtain the original information of the data or signaling.

The apparatus for transmitting the downlink channel as shown in the above-mentioned Fig.7 may be arranged in the terminal.

See Fig.8, it is a block diagram of an embodiment of a terminal in the present invention.

The terminal includes a radio transceiver 810 and a processor 820.

The processor 820 is configured to receive a downlink channel transmitted by a base station through the radio transceiver 810 according to transmission information of the downlink channel, combine and decode or blindly decode the downlink channel, and transmit a feedback channel to the base station through the radio transceiver 810 according to transmission information of the feedback channel, wherein the feedback channel is used by the terminal to feed back ACK to the base station after the terminal determines, according to a decoding result, that the downlink channel is correctly received.

Optionally, the processor 820 may be specifically configured to, when the transmission information of the downlink channel includes number of transmissions of the downlink channel, receive the downlink channel transmitted by the base station through the radio transceiver according to the number of transmissions of the downlink channel, and when the transmission information of the feedback channel includes number of transmissions of the feedback channel, transmit the feedback channel to the base station through the radio transceiver according to the number of transmissions of the feedback channel.

Optionally, a preset relationship exists between the feedback channel transmitted by the processor 820 through the radio transceiver 810 and the downlink channel; wherein the preset relationship includes: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

Optionally, the time domain resource, or the frequency domain resource, or the time domain and frequency domain resource of the feedback channel transmitted by the processor 820 through the radio transceiver 810 is the time domain resource, or the frequency domain resource, or the time domain and frequency domain resource notified by the base station through the downlink channel.

Optionally, the processor 820 may be specifically configured to repeatedly transmit the feedback channel to the base station through the radio transceiver after the base station repeatedly transmits all downlink channels, or repeatedly transmit the feedback channel to the base station through the radio transceiver after the base station repeatedly transmits a part of downlink channels; wherein, the repeatedly transmitting the feedback channel to the base station through the radio transceiver after the base station repeatedly transmits a part of the downlink channels, is specifically as follows: repeatedly transmitting the feedback channel to the base station through the radio transceiver after the base station divides all downlink channels to be repeatedly transmitted into multiple groups, and each group of downlink channels is repeatedly transmitted.

Optionally, the processor 820 may be specifically configured to transmit the feedback channel to the base station through the radio transceiver on a time domain resource or a time domain and frequency domain resource when the transmission information of the downlink channel includes the time domain resource or the time domain and frequency domain resource of the feedback channel transmitted by the terminal, or transmit the feedback channel to the base station through the radio transceiver on a time domain or time domain and frequency domain resource pre-appointed with the base station.

Optionally, data or signaling transmitted by the downlink channel received by the processor 820 through the radio transceiver is the data or signaling obtained by the base station by padding an original information bit of the data or signaling smaller than a datum length to enable the length to reach the datum length, and packet header information of the padded data or signaling includes at least one piece of the following information: an original length of the data or signaling, and a type of the data or signaling; the processor 820 may be specifically configured to decode the combined downlink channel according to the datum length of the data or signaling; correspondingly, the processor 820 may be further configured to, when the decoding is correct, read packet header information of the data or signaling to obtain the original information of the data or signaling.

It can be seen from the above-mentioned embodiments that, the base station transmits the downlink channel to the terminal according to the transmission information of the downlink channel, the terminal combines the received downlink channel and decodes or blindly decodes the combined downlink channel, the terminal transmits the feedback channel to the base station after determining that the downlink channel correctly received according to the decoding result, and after receiving the feedback channel transmitted by the terminal according to the transmission information of the feedback channel, the base station combines and decodes the feedback channel. The embodiments of the present invention is applied in a network combining M2M with an LTE communication system. By means of the feature of small transmission data or signaling of the terminals in the M2M, when scheduling the terminal, the base station does not need to send the downlink control channel before sending the downlink data channel, but directly transmits one kind of downlink channel, thus system overhead is reduced; correspondingly, for the terminals in the M2M, since these terminals do not need to detect a large amount of control channels to obtain the data channel, but only need to detect the one kind of downlink channel to obtain corresponding data or signaling, electric energy of the terminals is saved; in addition, in the embodiments, before the data channel is transmitted, the control channel does not need to be transmitted, thus the resources of the control channel in the system are saved; since the terminal may demodulate the received data channels at one time by combining, the resources of the data channels in the system are saved; moreover, compared with the prior art, the terminal does not need to feed back multiple pieces of information to the base station due to HARQ retransmission and only feeds back the ACK to the base station for one time when the decoding is correct, so that the feedback resources of the system are saved.

Those skilled in the art may clearly understand that the technology in the embodiments of the present invention may be implemented by software plus a necessary universal hardware platform. Based on this understanding, the technical solutions in the embodiments of the present invention essentially or the part contributing to the prior art may be embodied in the form of a software product, wherein the computer software product may be stored in a storage medium, such as a ROM/RAM, a magnetic disk, an optical disk or the like, and include several instructions for instructing a computer device (may be a personal computer, a server, or a network device and the like) to implement the embodiments of the present invention or the methods in certain portions of the embodiments.

The embodiments in the description are described in a progressive manner, the identical or similar parts between the embodiments refer to each other, and what is highlighted in each embodiment is difference with other embodiments. In particular, for the system embodiment, it is basically similar to the method embodiments, thus is described simply. For related parts, see a part of illustration to the method embodiments.

The embodiments of the present invention described above are not construed as limiting the protection scope of the present invention. Any modifications, equivalent substitutions and improvements or the like made within the spirit and principle of the present invention shall fall within the protection scope of the present invention.

## Claims

1. A channel transmission method, comprising:
transmitting, by a base station, a downlink channel to a terminal according to transmission information of the downlink channel; and
receiving, by the base station, a feedback channel transmitted by the terminal according to transmission information of the feedback channel, and combining and decoding the feedback channel, wherein the feedback channel is used by the terminal to feed back a receiving acknowledgement ACK to the base station after the terminal receives the downlink channel correctly.

2. The method of claim 1, wherein,
the transmission information of the downlink channel at least comprises number of transmissions of the downlink channel; and
the transmission information of the feedback channel at least comprises number of transmissions of the feedback channel.

3. The method of claim 2, wherein,
the transmission information of the downlink channel further comprises at least one piece of the following information: a time domain resource, or a frequency domain resource, or a time domain and frequency domain resource capable being selected to be occupied by the downlink channel; a modulation format adopted by the downlink channel; and an encoding format adopted by the downlink channel; and
the transmission information of the feedback channel further comprises at least one piece of the following information: a time domain resource, or a frequency domain resource, or a time domain and frequency domain resource occupied by the feedback channel; a modulation format adopted by the feedback channel; and an encoding format adopted by the feedback channel.

4. The method of any of claims 1-3, wherein a preset relationship exists between the feedback channel transmitted by the terminal and the downlink channel;
wherein the preset relationship comprises: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

5. The method of any of claims 1-3, wherein a time domain resource, or a frequency domain resource, or a time domain and frequency domain resource of the feedback channel transmitted by the terminal is a time domain resource, or a frequency domain resource, or a time domain and frequency domain resource notified by the base station.

6. The method of claim 5, wherein the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

7. The method of any of claims 2-6, wherein the receiving a feedback channel transmitted by the terminal, comprises:
receiving the feedback channel repeatedly transmitted by the terminal after all downlink channels are repeatedly transmitted, or receiving the feedback channel repeatedly transmitted by the terminal after a part of the downlink channels are repeatedly transmitted; wherein the receiving the feedback channel repeatedly transmitted by the terminal after a part of the downlink channels are repeatedly transmitted, is specifically as follows: dividing all downlink channels to be repeatedly transmitted into multiple groups, receiving the feedback channel repeatedly transmitted by the terminal after each group of downlink channels is repeatedly transmitted, until the ACK is received or the multiple groups of downlink channels are transmitted.

8. The method of any of claims 1-7, wherein the downlink channel is a downlink data channel used for transmitting data, or a downlink control channel used for transmitting signaling;
wherein the signaling comprises control signaling for scheduling uplink transmission, or MAC signaling.

9. The method of any of claims 1-8, wherein before the transmitting, by a base station, a downlink channel to a terminal according to transmission information of the downlink channel, the method further comprises:
padding, by the base station, an original information bit of data or signaling whose length is smaller than a datum length and which is transmitted by the downlink channel, for enabling the length of the padded data or signaling to reach the datum length.

10. The method of any of claims 1-9, wherein data or signaling transmitted by the downlink channel comprises packet header information, wherein the packet header information comprises at least one piece of the following information: an original length of the data or signaling, and a type of the data or signaling.

11. A channel transmission method, comprising:
receiving, by a terminal, a downlink channel transmitted by a base station according to transmission information of the downlink channel;
combining and decoding or blindly decoding, by the terminal, the received downlink channel; and
transmitting, by the terminal, a feedback channel to the base station according to transmission information of the feedback channel, wherein the feedback channel is used by the terminal to feed back ACK to the base station after the terminal determines, according to a blind decoding result that, the downlink channel is received correctly.

12. The method of claim 11, wherein,
the transmission information of the downlink channel at least comprises number of transmissions of the downlink channel; and
the transmission information of the feedback channel at least comprises number of transmissions of the feedback channel.

13. The method of claim 12, wherein,
the transmission information of the downlink channel further comprises at least one piece of the following information: a time domain resource or a time domain and frequency domain resource capable being selected to be occupied by the downlink channel; a time domain resource or a time domain and frequency domain resource used by the terminal for transmitting the feedback channel; a modulation format adopted by the downlink channel; and an encoding format adopted by the downlink channel; and
the transmission information of the feedback channel further comprises at least one piece of the following information: a time domain resource or a time domain and frequency domain resource occupied by the feedback channel; a modulation format adopted by the feedback channel; and an encoding format adopted by the feedback channel.

14. The method of any of claims 11-13, wherein a preset relationship exists between the feedback channel transmitted by the terminal and the downlink channel;
wherein the preset relationship comprises: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

15. The method of any of claims 11-13, wherein a time domain resource, or a frequency domain resource, or a time domain and frequency domain resource of the feedback channel transmitted by the terminal is a time domain resource, or a frequency domain resource, or a time domain and frequency domain resource notified by the base station.

16. The method of claim 15, wherein the time domain resource, or the frequency domain resource, or the time domain and frequency domain resource of the feedback channel transmitted by the terminal is the time domain resource, or the frequency domain resource, or the time domain and frequency domain resource notified by the base station through the downlink channel.

17. The method of any of claims 12-16, wherein the transmitting a feedback channel to the base station, comprises:
transmitting repeatedly the feedback channel to the base station after the base station repeatedly transmits all downlink channels, or transmitting repeatedly the feedback channel to the base station after the base station repeatedly transmits a part of the downlink channels; wherein,
the transmitting repeatedly the feedback channel to the base station after the base station repeatedly transmits a part of the downlink channels, is specifically as follows: repeatedly transmitting the feedback channel to the base station, after the base station divides all downlink channels to be repeatedly transmitted into multiple groups and each group of downlink channels is repeatedly transmitted.

18. The method of any of claims 11-17, wherein the downlink channel is a downlink data channel used for transmitting data, or a downlink control channel used for transmitting signaling;
wherein, the signaling comprises control signaling for scheduling uplink transmission, or MAC signaling.

19. The method of any of claims 11-18, further comprising: when data or signaling transmitted by the downlink channel is the data or signaling obtained by the base station by padding an original information bit of the data or signaling whose length is smaller than a datum length and which is transmitted by the downlink channel to enable the length to reach the datum length, packet header information of the padded data or signaling comprises at least one piece of the following information: an original length of the data or signaling, and a type of the data or signaling;
the combining and blindly decoding the received downlink channel, specifically comprises: decoding the combined downlink channel according to the datum length of the data or signaling; and
the method further comprises: when the blind decoding is correct, reading the packet header information of the data or signaling to obtain original information of the data or signaling.

20. A channel transmission apparatus, comprising:
a first transmitting unit, configured to transmit a downlink channel to a terminal according to transmission information of the downlink channel;
a first receiving unit, configured to receive a feedback channel transmitted by the terminal according to transmission information of the feedback channel, wherein the feedback channel is used by the terminal to feed back ACK to the base station after the downlink channel transmitted by the first transmitting unit is correctly received; and
a first combining and decoding unit, configured to combine and decode the feedback channel received by the first receiving unit.

21. The apparatus of claim 20, wherein
the first transmitting unit is specifically configured to, when the transmission information of the downlink channel comprises number of transmissions of the downlink channel, transmit the downlink channel to the terminal according to the number of transmissions of the downlink channel; and
the first receiving unit is specifically configured to, when the transmission information of the feedback channel comprises number of transmissions of the feedback channel, receive the feedback channel transmitted by the terminal according to the number of transmissions of the feedback channel.

22. The apparatus of claim 20 or 21, wherein a preset relationship exists between the feedback channel received by the first receiving unit and the downlink channel transmitted by the first transmitting unit; wherein the preset relationship comprises: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

23. The apparatus of claim 20 or 21, wherein a time domain resource, or a frequency domain resource, or a time domain and frequency domain resource of the feedback channel received by the first receiving unit is a time domain resource, or a frequency domain resource, or a time domain and frequency domain resource notified by the first transmitting unit through the downlink channel.

24. The apparatus of any of claims 21-23, wherein,
the first receiving unit is specifically configured to receive the feedback channel repeatedly transmitted by the terminal after the first transmitting unit repeatedly transmits all downlink channels, or receive the feedback channel repeatedly transmitted by the terminal after the first transmitting unit transmits a part of the downlink channels;
wherein, the receiving the feedback channel repeatedly transmitted by the terminal after a part of the downlink channels are repeatedly transmitted, is specifically as follows: dividing all downlink channels to be repeatedly transmitted into multiple groups, and receiving the feedback channel repeatedly transmitted by the terminal after each group of downlink channels is repeatedly transmitted, until the ACK is received or the multiple groups of downlink channels are transmitted.

25. The apparatus of any of claims 20-24, further comprising:
a padding unit, configured to pad an original information bit of data or signaling whose length is smaller than a datum length and which is transmitted by the downlink channel to be transmitted by the first transmitting unit, for enabling the length of the padded data or signaling to reach the datum length.

26. A base station, comprising: a transceiver and a processor, wherein,
the processor is configured to transmit a downlink channel to a terminal through the transceiver according to transmission information of the downlink channel, receive a feedback channel transmitted by the terminal through the transceiver according to transmission information of the feedback channel, and combine and decode the feedback channel, wherein the feedback channel is used by the terminal to feed back a receiving acknowledgement ACK to the base station after the downlink channel is correctly received.

27. The base station of claim 26, wherein,
the processor is specifically configured to, when the transmission information of the downlink channel comprises number of transmissions of the downlink channel, transmit the downlink channel to the terminal through the transceiver according to the number of transmissions of the downlink channel, and when the transmission information of the feedback channel comprises number of transmissions of the feedback channel, receive the feedback channel transmitted by the terminal according to the number of transmissions of the feedback channel.

28. The base station of claim 26 or 27, wherein,
a preset relationship exists between the feedback channel transmitted by the terminal and received by the processor through the transceiver and the downlink channel; a time domain and frequency domain resource of the feedback channel corresponds to a time domain and frequency domain resource of the downlink channel;
wherein the preset relationship comprises: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to the time domain and frequency domain resource for transmitting the downlink channel.

29. The base station of claim 26 or 27, wherein,
a time domain resource, or a frequency domain resource, or a time domain and frequency domain resource of the feedback channel transmitted by the terminal and received by the processor through the transceiver is a time domain resource, or a frequency domain resource, or a time domain and frequency domain resource notified by the base station through the downlink channel.

30. The base station of any of claims 27-29, wherein,
the processor is specifically configured to receive the feedback channel repeatedly transmitted by the terminal after transmitting all downlink channels through the transceiver, or receive the feedback channel repeatedly transmitted by the terminal after transmitting a part of the downlink channels through the transceiver;
wherein, the receiving the feedback channel repeatedly transmitted by the terminal after a part of the downlink channels are repeatedly transmitted, is specifically as follows: dividing all downlink channels to be repeatedly transmitted into multiple groups, and receiving the feedback channel repeatedly transmitted by the terminal after each group of downlink channels is repeatedly transmitted, until the ACK is received or the multiple groups of downlink channels are transmitted.

31. The base station of any of claims 26-30, wherein
the processor is further configured to, before transmitting the downlink channel through the transceiver, pad an original information bit of data or signaling whose length is smaller than a datum length and which is transmitted by the downlink channel, for enabling the length of the padded data or signaling to reach the datum length.

32. A channel transmission apparatus, comprising:
a second receiving unit, configured to receive a downlink channel transmitted by a base station according to transmission information of the downlink channel;
a second combining and decoding unit, configured to combine and blindly decode the downlink channel received by the second receiving unit; and
a second transmitting unit, configured to transmit a feedback channel to the base station according to transmission information of the feedback channel, wherein the feedback channel is used by the terminal to feed back ACK to the base station after the terminal determines, according to a blind decoding result of the second combining and decoding unit, that the downlink channel is received correctly.

33. The apparatus of claim 32, wherein
the second receiving unit is specifically configured to, when the transmission information of the downlink channel comprises number of transmissions of the downlink channel, receive the downlink channel transmitted by the base station according to the number of transmissions of the downlink channel; and
the second transmitting unit is specifically configured to, when the transmission information of the feedback channel comprises number of transmissions of the feedback channel, transmit the feedback channel to the base station according to the number of transmissions of the feedback channel.

34. The apparatus of claim 32 or 33, wherein a preset relationship exists between the feedback channel transmitted by the second transmitting unit and the downlink channel received by the second receiving unit;
wherein the preset relationship comprises: a time domain resource for transmitting the feedback channel corresponds to a time domain resource for transmitting the downlink channel, or a frequency domain resource for transmitting the feedback channel corresponds to a frequency domain resource transmitting the downlink channel, or a time domain and frequency domain resource for transmitting the feedback channel corresponds to a time domain and frequency domain resource for transmitting the downlink channel.

35. The apparatus of claim 32 or 33, wherein a time domain resource, or a frequency domain resource, or a time domain and frequency domain resource of the feedback channel transmitted by the second transmitting unit is a time domain resource, or a frequency domain resource, or a time domain and frequency domain resource notified by the base station through the downlink channel.

36. The apparatus of any of claims 32-35, wherein,
the second transmitting unit is specifically configured to repeatedly transmit the feedback channel to the base station after the base station repeatedly transmits all downlink channels, or repeatedly transmit the feedback channel to the base station after the base station repeatedly transmits a part of downlink channels; wherein,
the repeatedly transmitting the feedback channel to the base station after the base station repeatedly transmits a part of the downlink channels, is specifically as follows: repeatedly transmitting the feedback channel to the base station, after the base station divides all downlink channels to be repeatedly transmitted into multiple groups and each group of downlink channels is repeatedly transmitted.

37. The apparatus of any of claims 32-36, wherein,
data or signaling transmitted by the downlink channel received by the second receiving unit is the data or signaling obtained by the base station by padding an original information bit of the data or signaling whose length is smaller than a datum length to enable the length to reach the datum length, and packet header information of the padded data or signaling comprises at least one piece of the following information: an original length of the data or signaling, and a type of the data or signaling;
the second combining and decoding unit is specifically configured to decode the combined downlink channel according to the datum length of the data or signaling;
the apparatus further comprises:
a reading unit configured to, when the blind decoding of the second combining and decoding unit is correct, read the packet header information of the data or signaling to obtain original information of the data or signaling.

38. A terminal, comprising: a radio transceiver and a processor, wherein,
the processor is configured to receive a downlink channel transmitted by a base station through the radio transceiver according to transmission information of the downlink channel, combine and blindly decode the downlink channel, and transmit a feedback channel to the base station through the radio transceiver according to transmission information of the feedback channel, wherein the feedback channel is used by the terminal to feed back ACK to the base station after the terminal determines, according to a blind decoding result, that the downlink channel is correctly received.

39. The terminal of claim 38, wherein,
the processor is specifically configured to, when the transmission information of the downlink channel comprises number of transmissions of the downlink channel, receive the downlink channel transmitted by the base station through the radio transceiver according to the number of transmissions of the downlink channel, and when the transmission information of the feedback channel comprises number of transmissions of the feedback channel, transmit the feedback channel to the base station through the radio transceiver according to the number of transmissions of the feedback channel.

40. The terminal of claim 38 or 39, wherein a preset relationship exists between the feedback channel transmitted by the processor through the radio transceiver and the downlink channel;
wherein the preset relationship comprises: a time domain resource for transmitting the feedback channel corresponds to a time domain resource for transmitting the downlink channel, or a frequency domain resource for transmitting the feedback channel corresponds to a frequency domain resource for transmitting the downlink channel, or a time domain and frequency domain resource for transmitting the feedback channel corresponds to a time domain and frequency domain resource for transmitting the downlink channel.

41. The terminal of claim 38 or 39, wherein a time domain resource, or a frequency domain resource, or a time domain and frequency domain resource of the feedback channel transmitted by the processor through the radio transceiver is a time domain resource, or a frequency domain resource, or a time domain and frequency domain resource notified by the base station through the downlink channel.

42. The terminal of any of claims 38-41, wherein,
the processor is specifically configured to repeatedly transmit the feedback channel to the base station through the radio transceiver after the base station repeatedly transmits all downlink channels, or repeatedly transmit the feedback channel to the base station through the radio transceiver after the base station repeatedly transmits a part of downlink channels; wherein,
the repeatedly transmitting the feedback channel to the base station through the radio transceiver after the base station repeatedly transmits a part of the downlink channels, is specifically as follows: repeatedly transmitting the feedback channel to the base station through the radio transceiver, after the base station divides all downlink channels to be repeatedly transmitted into multiple groups and each group of downlink channels is repeatedly transmitted.

43. The terminal of any of claims 38-42, wherein,
data or signaling transmitted by the downlink channel received by the processor through the radio transceiver is the data or signaling obtained by the base station by padding an original information bit of the data or signaling whose length is smaller than a datum length to enable the length to reach the datum length, and packet header information of the padded data or signaling comprises at least one piece of the following information: an original length of the data or signaling, and a type of the data or signaling;
the processor is specifically configured to decode the combined downlink channel according to the datum length of the data or signaling;
and the processor is further configured to, when the blind decoding is correct, read the packet header information of the data or signaling to obtain original information of the data or signaling.
